# EUROPÄISCHE PATENTSCHRIFT

(11) **EP 2 111 949 B1**
(45) Veröffentlichungstag und Bekanntmachung des Hinweises auf die Patenterteilung: **05.11.2014**
(21) Anmeldenummer: 09005554.2
(22) Anmeldetag: 21.04.2009
(51) Int. Cl.: B24B 23/02, B24B 55/00, F16D 59/00

(54) **Elektrowinkelschleifgerät**
Electronic angle grinder
Meuleuse d'angle électrique

(30) Priorität: 25.04.2008 DE 102008022290
(43) Veröffentlichungstag der Anmeldung: 28.10.2009
(73) Patentinhaber: Metabowerke GmbH, 72622 Nürtingen (DE)
(72) Erfinder: Will, Manuel, 72793 Pfullingen (DE); Stiegele, Armin, 70736 Fellbach-Schmieden (DE)
(74) Vertreter: Raunecker, Klaus Peter

(56) Entgegenhaltungen:
- DE-A1- 3 209 162
- DE-A1- 3 722 629
- US-A- 5 042 626
- US-A- 5 813 903

## Beschreibung

Die Erfindung betrifft ein Elektrowinkelschleifgerät, umfassend einen Anker mit einer in einer Längsrichtung erstrecken Ankerwelle mit einer werkzeugseitigen Abtriebsseite und einer gegenüberliegenden einem Handgriff zugewandten Seite, die einen Teil einet Antriebsstrangs in Richtung auf ein rotierend oder exentrisch antreibbares Werkzeug, wie z.B. eine Trenn- oder Schruppscheibe, bildet, und mit einem manuell betätigbaren Schalterdrücker. Der Schalterdrücker wirkt mit einer Bremseinrichtung so zusammen, dass beim Bestätigen des Schalterdrückers die Bremseinrichtung gelöst wird und dass beim Loslassen des Schalterdrückers die Bremseinrichtung aktiviert wird.

Derartige Elektrowinkelschleifgeräte sind bekannt. So offenbart beispielsweise eie weitere Anmeldung der Patentanmelderin, das Dokument DE 37 22 629 A1, einen Winkelschleifer mit einer Bremseinrichtung, wobei die Bremseinrichtung eine Scheibenbremseinrichtung umfasst. Diese weit eine an der Ankerwelle des Motors drehfest angebrachte Bremsscheibe auf, an die zum Bremsen ein mit Federdruck beaufschlagtes erstes bremselement anlegbar ist. Ferner ist die Bremsvorrichtung derart mit einem Schalter gekoppelt, dass bei Betätigen des Schalters die Bremse gelöst und nach Freigabe des Schalters der Motor gebremst wird. Beim Ausschalten kann das Werkzeug, beispielsweise eine Trenn- oder Schruppscheibe, trägheitsbedingt lange nachlaufen bevor es stillsteht.

DE 32 09 162 A1 zeigt eine nicht gattungsgemaße Motorkettensäge, bei der das Werkzeug durch eine Bandbremseinrichtung stillsetzbar ist. Die Bandbremseinrichtung ist dabei in der Nähe des Werkzeugs angeordnet, das beim Bremsen zusammen mit der Bandbremseinrichtung aus dem Antriebsstrang ausgekuppelt wird, wofür eine komplexe Kupplungseinrichtung vorgesehen ist. Eine weitere nicht gattungsgemäße Bandbremseinrichtung ist ebenfalls aus dem Dokument DE 32 09 162 A1 bekannt.

Der vorliegenden Erfindung liegt die Aufgabe zugrunde, ein Elektrowinkelschleifgerät der eingangs genannten Art vorzuschlagen, dessen Werkzeug rascher stillsetzbar ist und das einfach und kostengünstig herstellbar ist.

Diese Aufgabe wird bei einem Elektrowinkelschleifgerät der eingangs genannten Art erfingdungsgemäß dadurch gelöst, dass als Bremseinrichtung eine Bandbremseinrichtung auf der dem Handgriff zugewandten Seite der Ankerwelle vorgesehen ist mit einem flexibel biegsamen Flachmaterialabschnitt, der mit einer Flachseite einen Abschnitt der Ankerwelle in Umfangsrichtung zumindest teilweise umgibt und in einer ersten Funktionsstellung von dem Abschnitt der Ankerwelle radial beabstandet ist und in einer zweiten Funktionsstellung an dem Anschnitt der Ankerwelle anliegt, so dass die Ankerwelle durch den anliegenden Flachmaterialabschnitt der Bandbremseinrichtung abgebremst und rasch stillgesetzt wird.

Wenn die Ankerwelle durch den Elektromotor angetrieben wird, so befindet sich die Bandbremseinrichtung in der ersten Funktionsstellung Wird die Ankerwelle nicht angetrieben, befindet sich die Bandbremseinrichtung in der zweiten Funktionsstellung. In dieser zweiten Funktionsstellung wirkt der flexibel biegsame Flachmaterialabschnitt den Trägheitskräften der Komponenten des Antriebsstrangs entgegen.

Es erweist sich als vorteilhaft, wenn der Antriebsstrang bei einem Wechsel von der ersten Funktionsstellung in die zweite Funktionsstellung nicht unterbrochen wird. Dadurch ist gewährleistet, dass alle Komponenten des Antriebsstrangs gleichzeitig mit der Ankerwelle stillgesetzt werden und dass das Elektrowinkelschleifgerät einfach und kompakt ausgebildet werden kann.

In Weiterbildung der Erfindung liegt der flexibel biegsame Flachmaterialabschnitt an dem Abschnitt der Ankerwelle in einem Winkelbereich von 90° bis 300°, insbesondere von 120° bis 270°, insbesondere von 150° bis 240° an. Je größer der Winkelbereich ist, über den der flexibel biegsame Flachmaterialabschnitt an dem Abschnitt der Ankerwelle anliegt, desto schneller kann die Ankerwelle stillgesetzt werden. Dadurch ist die Bremskraft und die Abbremszeit vorgebbar, wodurch ein Verschleiß einzelner Komponenten des Antriebstranges reduzierbar ist.

Darüber hinaus hat es sich als vorteilhaft erwiesen, wenn der mit dem flexibel biegsamen Flachmaterialabschnitt zusammenwirkende Abschnitt der Ankerwelle einen erweiterten Umfang, insbesondere einen Wellenbund, aufweist. Dadurch wird die Fläche, an der der flexibel biegsame Flachmaterialabschnitt und der Abschnitt der Ankerwelle einander berühren, vergrößert, wodurch die Bremskraft und die Abbremszeit ebenfalls einstellbar sind.

Ferner umfasst die Bandbremseinrichtung bei einer Ausführungsform eine Bremstrommel, die den mit dem flexibel biegsamen Materialabschnitt zusammenwirkenden Abschnitt der Ankerwelle bildet. Die Bremstrommel kann dabei unlösbar mit der Ankerwelle verbunden sein, beispielsweise durch einen Presssitz. Es wird jedoch eine Ausführungsform der Bandbremseinrichtung bevorzugt, bei der die Bremstrommel lösbar mit der Ankerwelle verbindbar ist. Dadurch lassen sich Bremstrommeln mit verschiedenen Durchmessern mit der Ankerwelle verbinden, wodurch die Bremskraft und die Abbremszeit des Elektrowinkelschleifgeräts auf einfache Art variiert werden können.

Darüber hinaus erweist es sich herstellungstechnisch als vorteilhaft, wenn die Bremstrommel ein Tiefziehteil umfasst, beziehungsweise von einem Tiefziehteil gebildet ist.

In Weiterbildung der Erfindung wird vorgeschlagen, dass der mit dem flexibel biegsamen Flachmaterialabschnitt zusammenwirkende Abschnitt der Ankerwelle von einem, insbesondere separierbaren, axialen Verlängerungsabschnitt der Ankerwelle gebildet ist. Durch den axialen Verlängerungsabschnitt kann bei der Ankerwelle auf Standardteile zurückgegriffen werden wodurch Kosten reduziert werden. Darüber hinaus, kann die Ankerwelle so auf einfache Weise in ihrer Länge variiert werden. Dadurch, dass die Ankerwelle einen separierbaren axialen Verlängerungsabschnitt aufweist, können herstellerseitig mehrere, austauschbare axiale Verlängerungsabschnitte mit unterschiedlichem Durchmesser vorgesehen sein.

Es erweist sich ferner als vorteilhaft, wenn eine erste gehäusefeste Halteeinrichtung vorgesehen ist, an der der flexibel biegsame Flachmaterialabschnitt mit einem ersten Ende befestigt ist. Dabei kann der flexibel biegsame Flachmaterialabschnitt lösbar oder unlösbar mit der ersten Halteeinrichtung verbunden sein. Bevorzugt wird eine Ausführungsform der ersten Halteeinrichtung, die einen in Längsrichtung des Elektrowinkelschleifgeräts erstreckten Vorsprung aufweist, an dem der flexibel biegsame Flachmaterialabschnitt mit einem ersten Ende befestigt ist.

Es erweist sich ferner als vorteilhaft, wenn die erste Halteeinrichtung mehrere, in einer Längsrichtung des Elektrowinkelschleifgeräts erstreckte Vorsprünge aufweist, so dass an der ersten Halteeinrichtung flexibel biegsame Flachmaterialabschnitte unterschiedlicher Länge befestigbar sind.

Darüber hinaus ist in Weiterbildung der Erfindung vorgesehen, dass das erste Ende des flexibel biegsamen Flachmaterialabschnitts insbesondere mehrfach umgebogen oder abgewinkelt ist und dadurch an der Halteeinrichtung verliersicher anordenbar ist.

Die erste Halteinrichtung kann von einer Gehäusekomponente selbst gebildet sein. Es erweist sich aber als vorteilhaft, wenn die erste gehäusefeste Halteeinrichtung von einem separaten jedoch gehäusefest angeordneten Bauteil, insbesondere einem Biegestanzteil, insbesondere einem Blechteil, gebildet ist. Das Halteeinrichtung umfasst dabei das vom Gehäuse separate Bauteil, das vorteilhafterweise aus dem Gehäuse entfernt werden kann. Die erste Halteeinrichtung, insbesondere wenn sie durch in Längsrichtung des Elektrowinkelschleifgeräts erstreckte Vorsprünge gebildet ist, kann einstückig mit dem Bauteil dadurch gebildet sein, dass die Vorsprünge aus dem Bauteil gebogen sind.

In Weiterbildung der Erfindung wird vorgeschlagen, dass das die Halteeinrichtung bildende Bauteil, insbesondere das Biegestanzteil, formschlüssig und verliersicher bezüglich einer Gehäusekomponente des Elektrowinkelschleifgeräts angeordnet ist. Hier kann eine in Umfangsrichtung verlaufende Nut in der Gehäusekomponente vorgesehen sein, in der das Bauteil, insbesondere das Biegestanzteil, gehalten ist. Es können jedoch auch Aussparungen oder Vorsprünge vorgesehen sein, so dass das Bauteil, insbesondere das Biegestanzteil, in die Gehäusekomponente eingesteckt oder eingeclipst werden kann.

Darüber hinaus erweist es sich als vorteilhaft, wenn eine einem zweiten Ende des flexibel biegsamen Flachmaterialabschnitts zugeordnete zweite gehäusefeste Halteeinrichtung vorgesehen ist. Mit dieser zweiten Halteeinrichtung kann der flexibel biegsame Flachmaterialabschnitt mittelbar oder unmittelbar verbunden sein.

Bevorzugt wird eine Ausführungsform, bei der die zweite Halteeinrichtung ein Federelement, insbesondere eine Zugfeder, aufweist, die den flexibel biegsamen Flachmaterialabschnitt in die zweite Funktionsstellung vorspannt. Der flexibel biegsame Flachmaterialabschnitt ist also einerseits an der ersten Halteeinrichtung angeordnet und andererseits an dem Federelement der zweiten Halteeinrichtung gehalten.

Die zweite Halteeinrichtung kann an der Gehäusekomponente des Elektrowinkelschleifgeräts ausgebildet sein. Es wird jedoch eine Ausführungsform bevorzugt bei der auch die zweite Halteeinrichtung von demselben separaten Bauteil wie die erste Halteeinrichtung gebildet ist.

Mit Betätigen des eingangs erwähnten Schalterdrückers wird der elektromotorische Antrieb bestromt. Der Schalterdrücker kann direkt mit der Bandbremseinrichtung verbunden sein. Bevorzugt wird jedoch ein Ausführungsbeispiel, bei dem der Schalterdrücker über einen Freigabehebel, insbesondere über eine Wippe, mit der Bandbremseinrichtung zusammenwirkt, wobei der Freigabehebel mit seinem einen Ende auf das zweite Ende des flexibel biegsamen Flachmaterialabschnitts einwirkt. Beim Betätigen des Schalterdrückers wird der Freigabehebel derart ausgelenkt, dass er das Federelement auslenkt und damit den flexibel biegsamen Flachmaterialabschnitt von der zweiten Funktionsstellung in die erste Funktionsstellung bewegt, so dass der Flachmaterialabschnitt nicht mehr an dem Abschnitt der Ankerwelle anliegt. Gleichzeitig wird der elektromotorische Antrieb des Elektrowinkelschleifgeräts bestromt und die Ankerwelle angetrieben.

Schließlich erweist es sich als vorteilhaft, wenn die Ankerwelle durch den anliegenden Flachmaterialabschnitt der Bandbremseinrichtung innerhalb von zwei bis vier Sekunden stillsetzbar ist. Dadurch wird ein Stoß, beispielsweise durch ein abruptes Abbremsen, vermieden und der Verschleiß der Komponenten des Antriebstrangs reduziert.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform des erfindungsgemäßen Elektrowinkelschleifgeräts. In der Zeichnung zeigen:
- Figur 1: eine explosionsartige Darstellung einer Bandbremseinrichtung und von Gehäusekomponenten;
- Figur 2: eine perspektivische und aufgerissene teilweise Darstellung eines erfindungsgemäßen Elektrowinkelschleifgeräts mit einer Bandbremseinrichtung nach Figur 1.

Die Figuren zeigen einen Teil eines Elektrowinkelschleifgeräts 2, bei dem ein Anker 4 mit einer Ankerwelle 6 in einer ersten Funktionsstellung des Elektrowinkelschleifgeräts 2 elektromotorisch angetrieben wird und durch eine Bandbremseinrichtung 8 in einer zweiten Funktionsstellung des Elektrowinkelschleifgeräts 2, bei der die Ankerwelle 6 nicht angetrieben wird, gebremst und festgelegt wird.

Anker 4 und Ankerwelle 6 bilden einen Teil eines Antriebsstrangs 10 zu einem ein nicht dargestellten rotierend oder exzentrisch antreibbaren Werkzeug, dessen Antriebsachse senkrecht zur Längsrichtung der Ankerwelle 6 verläuft. Die Bandbremseinrichtung 8 umfasst einen flexibel biegsamen Flachmaterialabschnitt 12, der mit einer Flachseite 14 einen Abschnitt 16 der Ankerwelle 6 in Umfangsrichtung zumindest teilweise umgibt.

In der ersten Funktionsstellung des Elektrowinkelschleifgeräts beziehungsweise der Bandbremseinrichtung, in der die Ankerwelle 6 elektromotorisch angetrieben ist, ist der flexibel biegsame Flachmaterialabschnitt 12 zum Abschnitt 16 der Ankerwelle 6 in radialer Richtung beabstandet. In der zweiten Funktionsstellung, in der die Ankerwelle 6 nicht angetrieben ist, liegt der Flachmaterialabschnitt 12 am Abschnitt 16 der Ankerwelle 6 an und bremst dadurch die Ankerwelle 6 bis zum Stillstand.

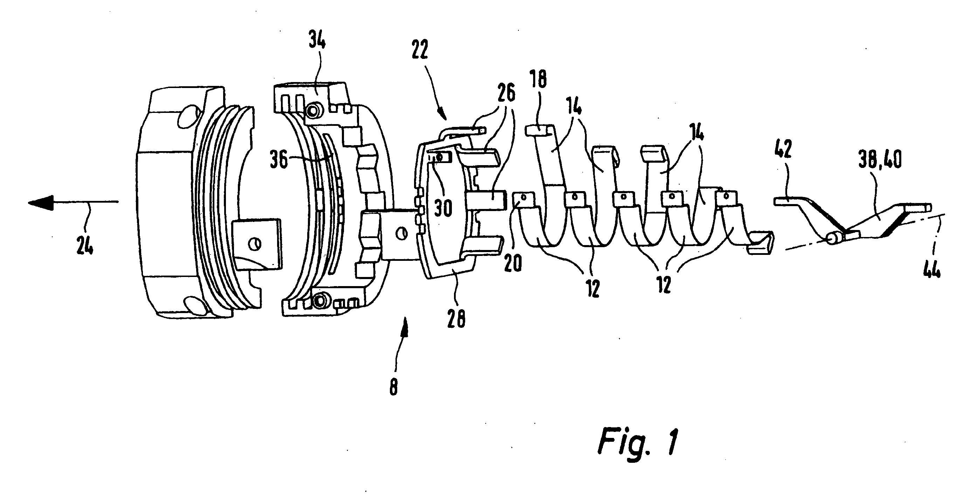

Figur 1 zeigt eine explosionsartige Darstellung der Bandbremseinrichtung 8, in der eine Mehrzahl unterschiedlich langer Flachmaterialabschnitte 12 gezeigt sind, die herstellerseitig wahlweise verwendet werden können. Bei Montage des Elektrowinkelschleifgeräts 2 ist jeweils nur ein einziger der Flachmaterialabschnitte 12 vorgesehen.

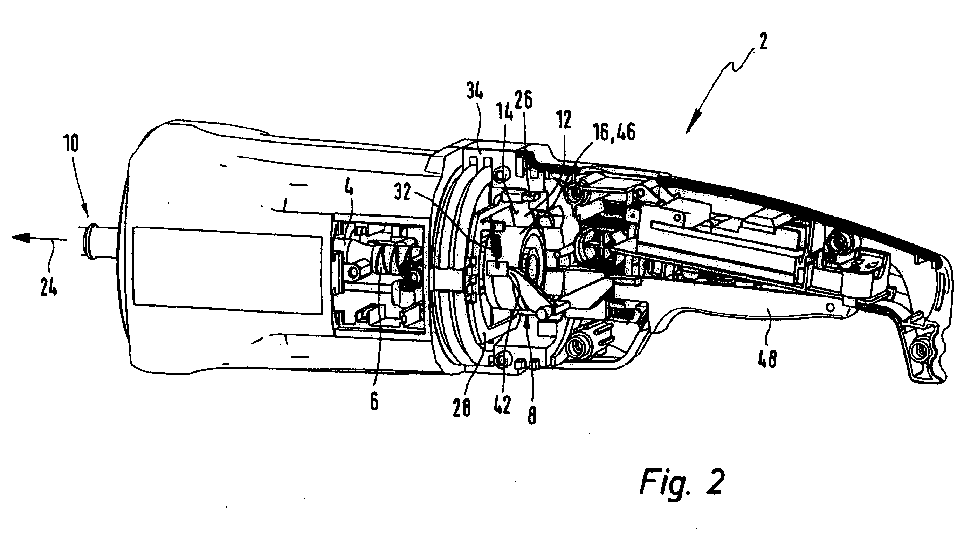

Der flexibel biegsame Flachmaterialabschnitt 12 weist ein erstes Ende 18 und ein zweites Ende 20 auf. Das erste Ende 18 ist bezüglich der Flachseite 14 umgebogen oder abgewinkelt. Mit dem ersten Ende 18 ist der flexibel biegsame Flachmaterialabschnitt 12 an einer ersten Halteeinrichtung 22, die in Längsrichtung 24 erstreckte Vorsprünge 26 umfasst, angeordnet. Jedem Vorsprung 26 ist ein flexibel biegsamer Flachmaterialabschnitt 12 zugeordnet. Die erste Halteeinrichtung 22 umfasst dabei ein ringförmiges Biegestanzteil 28. Das Biegestanzteil 28 bildet außer der ersten Halteeinrichtung 22 auch eine zweite Halteeinrichtung 30, die dem zweiten Ende 20 des flexibel biegsamen Flachmaterialabschnitts 12 zugeordnet ist. Figur 2 zeigt, dass die zweite Halteeinrichtung 30 außerdem ein Federelement 32 aufweist, das mit dem zweiten Ende 20 des flexibel biegsamen Flachmaterialabschnitts 12 verbindbar ist.

Das Biegestanzteil 28 ist in einer Gehäusekomponente 34 des Elektrowinkelschleifgeräts 2 verliersicher angeordnet. Dazu ist in der Gehäusekomponente 34 eine in Umfangsrichtung bezüglich der Ankerwelle 6 verlaufende Nut 36 vorgesehen, in die das Biegestanzteil 28 einsteckbar ist und dadurch gehalten ist.

Darüber hinaus zeigt Figur 1, dass ein mit der Bandbremseinrichtung 8 zusammenwirkender und als Wippe 38 ausgebildeter Freigabehebel 40 vorgesehen ist. Der Freigabehebel 40 weist ein Ende 42 auf, das mit dem zweiten Ende 20 des flexibel biegsamen Flachmaterialabschnitts 12 zusammenwirkt. Dabei ist der Freigabehebel 40 um eine Kippachse 44 schwenkbar gelagert.

Wie aus Figur 2 ersichtlich ist, ist der Abschnitt 16 der Ankerwelle 6 bei der dargestellten Ausführungsform als Bremstrommel 46 ausgebildet.

Im Folgenden wird die Wirkungsweise des erfindungsgemäßen Handwerkzeuggeräts 2 beschrieben:
Beim Betätigen eines Schalterdrückers 48 wird der elektromotorische Antrieb bestromt und die Bandbremseinrichtung 8 gelöst. Der Schalterdrücker 48 wirkt auf den als Wippe 38 ausgebildeten Freigabehebel 40 derart, dass er sich um die Kippachse 44 dreht. Dabei wird das Ende 42 des Freigabehebels 40 in der Bildebene der Figur 2 nach unten bewegt. Diese Bewegung führt dazu, dass auch das zweite Ende 20 des flexibel biegsamen Flachmaterialabschnitts 12 entgegen der Federspannung des Federelements 32 nach unten bewegt wird. Dadurch löst sich der flexibel biegsame Flachmaterialabschnitt 12 von dem als Bremstrommel 46 ausgebildeten Abschnitt 16 der Ankerwelle 6, so dass der flexibel biegsame Flachmaterialabschnitt 12 zu dem Abschnitt 16 in radialer Richtung beabstandet ist. Die Bandbremseinrichtung 38 befindet sich nun in ihrer ersten Funktionsstellung. Die Ankerwelle 6 ist so antreibbar, ohne durch die Bandbremseinrichtung 8 gebremst zu werden.
Beim Ausschalten des Elektrowinkelschleifgeräts 2, also beim Loslassen des Schalterdrückers 48, wirkt am Ende 42 des Freigabehebels 40 dem Federelement 32 nunmehr keine das Federelement 32 auslenkende Kraft entgegen. Das Federelement 32 zieht somit das zweite Ende 20 des flexibel biegsamen Flachmaterialabschnitts 12 in Richtung auf den Abschnitt 16 der Ankerwelle 6, wodurch der flexibel biegsame Flachmaterialabschnitt 12 mit seiner Flachseite 14 an der Bremstrommel 46 anliegt und die Ankerwelle 6 bremst und stillsetzt. Die Bandbremseinrichtung 8 befindet sich nun in ihrer zweiten Funktionsstellung.

Über die Aufhängung des flexibel biegsamen Flachmaterialabschnitts 12 mit seinem ersten Ende 18 an der ersten Halteeinrichtung 22 werden die beim Abbremsen der Ankerwelle 6 auftretenden Kräfte, die in dem flexibel biegsamen Flachmaterialabschnitt 12 wirken, über die erste Halteeinrichtung 22 an die Gehäusekomponente 34 übertragen.

## Patentansprüche

1. Elektrowinkelschleifgerät (2), umfassend einen Anker (4) mit einer in einer Längsrichtung erstreckten Ankerwelle (6) mit einer werkzeugseitigen Abtriebsseite und einer gegenüberliegenden einem Handgriff zugewandten Seite, die einen Teil eines Antriebsstrangs (10) in Richtung auf ein rotierend oder exzentrisch antreibbares Werkzeug, wie z.B. eine Trenn- oder Schruppscheibe, bildet, und mit einem manuell betätigbaren Schalterdrücker (48), wobei der Schalterdrücker (48) mit einer Bremseinrichtung (8) so zusammenwirkt, dass beim Bestätigen des Schalterdrückers (48) die Bremseinrichtung (8) gelöst wird und beim Loslassen des Schalterdrückers (48) die Bremseinrichtung (8) aktiviert wird,
**dadurch gekennzeichnet, dass** die Bremseinrichtung als eine Bandbremseinrichtung (8) ausgebildet ist, die auf der dem Handgriff zugewandten Seite der Ankerwelle (6) einen flexibel biegsamen Flachmaterialabschnitt (12) aufweist, der mit einer Flachseite (14) einen Abschnitt (16) der Ankerwelle (6) in Umfangsrichtung zumindest teilweise umgibt und in einer ersten Funktionsstellung von dem Abschnitt (16) der Ankerwelle (6) radial beabstandet ist und in einer zweiten Funktionsstellung an dem Abschnitt (16) der Ankerwelle (6) anliegt, so dass die Ankerwelle (6) durch den anliegenden Flachmaterialabschnitt (12) der Bandbremseinrichtung (8) abgebremst und rasch stillgesetzt wird.

2. Elektrowinkelschleifgerät (2) nach Anspruch 1, **dadurch gekennzeichnet, dass** der Antriebsstrang (10) bei einem Wechsel von der ersten Funktionsstellung in die zweite Funktionsstellung nicht unterbrochen wird.

3. Elektrowinkelschleifgerät (2) nach Anspruch 1 oder 2, **dadurch gekennzeichnet, dass** der flexibel biegsame Flachmaterialabschnitt (12) an dem Abschnitt (16) der Ankerwelle (6) in einem winkelbereich von 90° bis 300°, insbesondere von 120° bis 270°, insbesondere von 150° bis 240° anliegt.

4. Elektrowinkelschleifgerät (2) nach einem der vorhergehenden Ansprüche, **dadurch gekennzeichnet, dass** der mit dem flexibel biegsamen Flachmaterialabschnitt (12) zusammenwirkende Abschnitt (16) der Ankerwelle (6) einen erweiterten Umfang, insbesondere einen Wellenbund, aufweist.

5. Elektrowinkelschleifgerät (2) nach einem der vorhergehenden Ansprüche, :**dadurch gekennzeichnet, dass** die Bandbremseihrichtung (8) eine Bremstrommol (46) umfasst, die den mit dem flexibel biegsamen Flachmaterialabschnitt (12) zusammenwirkenden Abschnitt (16) der Ankerwelle (6) bildet.

6. slektrowinkelschleifgerät (2) nach Anspruch 5, **dadurch. gekennzeichnet, dass** die Bremstrommel (46) lösbar mit der Ankerwelle (6) verbindbar ist und insbesondere ein Tiefziehteil umfasst.

7. Elektrowinkelschleifgerät (2) nach einem der vorhergehenden Anspruche, **dadurch gekennzeichnet, dass** der mit dem flexibel biegsamen Flachmaterialabschnitt (12) zusammenwirkende Abschnitt (16) der Ankerwelle (6) von einem, insbesondere separierbaren, axialen Verlängerungsabschnitt der Ankerwelle (6) gebildet ist.

8. Elektrowinkelschleifgerät (2) nach einem der vorhergehenden Anspruche, **dadurch gekennzeichnet, dass** eine erste gehäusefeste Halteeinrichtung (22) vorgesehen ist, an der der flexibel biegsame Flächmaterialabschnitt (12) mit einem ersten Ende (18) befestigt ist, insbesondere an einem in einer Längsrichtung (24) des Elektrowinkelschleifgeräts (2) erstreckten Vorsprung (26).

9. Elektrowinkelschleifgerät (2) nach Aspruch 8, **dadurch gekennzeichnet, dass** die erste Halteeinrichtung (22) mehrere in einer Längsrichtung (24) des Elektrowinkelschleifgeräts (2) erstreckte Vorsprünge (26) aufweist, so dass an der ersten Halteeinrichtung (22) flexibel biegsame Flachmaterialabschnitte (12) Unterschiedlicher Länge befestigbar sind.

10. Elektrowinkelschleifgerät (2) nach einem der Ansprüche 8 bis 10, **dadurch gekennzeichnet, dass** das erste Ende (18) des flexibel biegsamen Flachmaterialabschnitts (12) umgebogen oder abgewinkelt ist und dadurch an der ersten Halteeinrichtung (22) verliersicher anordenbar ist.

11. Elektrowinkelschleifgerät (2) nach einem der Ansprüche 8 bis 11, **dadurch gekennzeichnet, dass** die erste gehäusefeste Halteeinrichtung (22) von einem Bauteil (28), insbesondere einem Biegestanzteil (28), insbesondere einem Blechteil, gebildet ist.

12. Elektrowinkelschleifgerät (2) nach Anspruch 11,
**dadurch gekennzeichnet, dass** das die erste gehäusefeste Halteeinrichtung bildende Bauteil (28), insbesondere das Biegestanzteil (28), formschlüssig und verliersicher bezüglich einer Gehäusekomponente (34) des Elektrowinkelschleifgeräts (2) angeordnet ist.

13. Elektrowinkelschleifgerät (2) nach einem der vorhergehenden Ansprüche, **gekennzeichnet durch** eine. einem zweiten Ende (20) des flexibel biegsamen Flachmaterialabschnitts (12) zugeordnete zweite gehäusefeste Halteeinrichtung (30).

14. Elektrowinkelschleifgerät (2) nach Anspruch 13,
**dadurch gekennzeichnet, dass** die zweite Halteeinrichtung (30) ein Federelement (32) aufweist, die den flexibel biegsamen Flachmaterialabschnitt (12) in die zweite Funktionsstellung vorspannt.

15. Elektrowinkelschleifgerät nach einem der vorhergehenden Ansprüche, **dadurch gekennzeichnet, dass** der Schalterdrücker (48) über einen Freigabehebel (40), insbesondere über eine wippe (38), mit der Bandbremseinrichtung (8) zusammenwirkt, wobei der Freigabehebel (40) mit seinem einen Ende (42) auf das zweite Ende (20) des flexibel biegsamen Flachmaterialabschnitts (12) einwirkt.

## Claims

1. Electric angle grinder (2), comprising an armature (4) with an armature shaft (6) extended in a longitudinal direction with a tool-side output side and an opposite side facing a handle, which shaft forms part of a drive train (10) in the direction of a rotationally or eccentrically drivable tool, such as e.g. a cutoff or roughing disc, and having a manually actuable trigger switch (48), the trigger switch (48) cooperating with a braking device (8) in such a way that on actuation of the trigger switch (48) the braking device (8) is released and on release of the trigger switch (48) the braking device (8) is activated,
**characterised in** the braking device is formed as a braking device (8) having, on the side of the armature shaft (6) facing the handle, a flexibly bendable flat material section (12) which with a flat side (14) at least partially surrounds a section (16) of the armature shaft (6) in a circumferential direction and in a first functional position is radially spaced from the section (16) of the armature shaft (6) and in a second functional position bears on the section (16) of the armature shaft (6), so that the armature shaft (6) is braked by the bearing-on flat material section (12) of the band braking device (8) and quickly stopped.

2. Electric angle grinder (2) according to Claim 1, **characterised in that** the drive train (10) is not interrupted on a change from the first functional position to the second functional position.

3. Electric angle grinder (2) according to Claim 1 or 2, **characterised in that** the flexibly bendable flat material section (12) bears on the section (16) of the armature shaft (6) in an angular range from 90° to 300°, in particular from 120° to 270°, in particular from 150° to 240°.

4. Electric angle grinder (2) according to one of the preceding claims, **characterised in that** the section (16) of the armature shaft (6) cooperating with the flexibly bendable flat material section (12) has an enlarged circumference, in particular a shaft collar.

5. Electric angle grinder (2) according to one of the preceding claims, **characterised in that** the band braking device (8) comprises a braking drum (46) which forms the section (16) of the armature shaft (6) cooperating with the flexibly bendable flat material section (12).

6. Electric angle grinder (2) according to Claim 5, **characterised in that** the braking drum (46) is detachably connectable to the armature shaft (6) and in particular comprises a deep-drawn part.

7. Electric angle grinder (2) according to one of the preceding claims, **characterised in that** the section (16) of the armature shaft (6) cooperating with the flexibly bendable flat material section (12) is formed by an, in particular separable, axial extension section of the armature shaft (6).

8. Electric angle grinder (2) according to one of the preceding claims, **characterised in that** a first housing-fixed holding device (22) is provided, to which the flexibly bendable flat material section (12) is fastened by a first end (18), in particular to a projection (26) extended in a longitudinal direction (24) of the electric angle grinder (2).

9. Electric angle grinder (2) according to Claim 8, **characterised in that** the first holding device (22) has a plurality of projections (26) extended in a longitudinal direction (24) of the electric angle grinder (2), so that flexibly bendable flat material sections (12) of different length can be fastened to the first holding device (22).

10. Electric angle grinder (2) according to one of Claims 8 to 10, **characterised in that** the first end (18) of the flexibly bendable flat material section (12) is bent over or angled and can thereby be captively arranged on the first holding device (22).

11. Electric angle grinder (2) according to on of Claims 8 to 11, **characterised in that** the first housing-fixed holding device (22) is formed by a component (28), in particular a bent-and-stamped part (28), in particular a sheet-metal art.

12. Electric angle grinder (2) according to Claim 11, **characterised in that** the component (28) forming the first housing-fixed holding device, in particular the bent-and-stamped part (28), is arranged fore-fittingly and captively with respect to a housing component (34) of the electric angle grinder (2).

13. Electric angle grinder (2) according to one of the preceding claims, **characterised by** a second housing-fixed holding device (30) assigned to a second end (20) of the flexibly bendable flat material section (12).

14. Electric angle grinder (2) according to Claim 13, **characterised in that** the second holding device (30) has a spring element (32) which prestresses the flexibly bendable flat material section (12) into the second functional position.

15. Electric angle grinder according to one of the preceding claims, **characterised in that** the trigger switch (48) cooperates with the band braking device (8) via a release lever (40), in particular via a rocker (38), the release lever (40) acting by its end (42) on the second end (20) of the flexibly bendable flat material section (12).

## Revendications

1. Meuleuse d'angle électrique (2) comportant un rotor (4) pourvu d'un arbre longitudinal (6) ayant une face d'entraînement disposée du côté de l'outil et une face opposée, orientée vers la poignée, qui constitue une partie d'une chaîne d'entrainement (10) dans la direction d'un outil entraîné en rotation ou excentrique, comme par exemple un disque de coupe ou de meulage, et comportant un bouton interrupteur (48) actionné manuellement, dans laquelle le bouton interrupteur (48) coopère avec une installation de freinage (8), de telle manière que, lors de l'actionnement du bouton interrupteur (48) l'installation de freinage (8) est désactivée, et lors de la libération du bouton interrupteur (48) l'installation de freinage (8) est activée,
**caractérisée en ce que** l'installation de freinage est configurée comme une installation de freinage à bande (8) qui présente, sur le côté orienté vers la poignée de l'arbre du rotor (6), une section flexible pliable de matériau plat (12), qui entoure au moins partiellement une section (16) de l'arbre du rotor (6) dans le sens périphérique, par un côté plat (14) et, qui se trouve, dans une première position fonctionnelle, éloignée de la section (16) de l'arbre du rotor (6) et, dans une seconde position fonctionnelle, en appui contre la section (16) de l'arbre du rotor (6), de telle manière que l'arbre du rotor (6) est freiné et rapidement arrêté par appui de la section flexible de matériau plat (12) de l'installation de freinage à bande (8).

2. Meuleuse d'angle électrique (2) selon la revendication 1, **caractérisée en ce que** la chaîne d'entraînement (10) n'est pas interrompue par un passage de la première position fonctionnelle dans la seconde position fionctionnelle.

3. Meuleuse d'angle électrique (2) selon la revendication 1 ou 2, **caractérisée en ce que** la section flexible pliable de matériau plat (12) est en appui contre la section (16) de l'arbre de rotor (6), sur un secteur angulaire compris entre 90° et 300°, en particulier entre 120° et 270°, en particulier entre 150° et 240°.

4. Meuleuse d'angle électrique (2) selon l'une quelconque des revendications précédentes, **caractérisée en ce que** la section (16) de l'arbre de rotor (6) qui coopère avec la section flexible pliable de matériau plat (12) présente un périmètre agrandi, en particulier un collet d'arbre.

5. Meuleuse d'angle électrique (2) selon l'une quelconque des revendications précédentes, **caractérisée en ce que** l'installation de freinage à bande (8) comporte un tambour de freinage (46), qui forme la section (16) de l'arbre de rotor (6) qui coopère avec la section flexible pliable de matériau plat (12).

6. Meuleuse d'angle électrique (2) selon la revendication 5, **caractérisée en ce que** le tambour de freinage (46) est amovible et peut être couplé avec l'arbre de rotor (6) et comporte en particulier une pièce étirée.

7. Meuleuse d'angle électrique (2) selon l'une quelconque des revendications précédentes, **caractérisée en ce que** la section (16) de l'arbre de rotor (6) qui coopère avec la section flexible pliable de matériau plat (12) est constituée d'une section de prolongement axial, en paraculier séparable de l'arbre de rotor (6).

8. Meuleuse d'angle électrique (2) selon l'une quelconque des revendications précédentes, **caractérisée en ce qu'**elle comporte un premier dispositif de fixation (22) solidaire d'un carter, sur lequel la section flexible pliable de matériau plat (12) est montée par une première extrémité (18), en particulier sur une protubérance (26) qui s'étend selon une direction (24) de la meuleuse d'angle électrique (2).

9. Meuleuse d'angle électrique (2) selon la revendication 8, **caractérisée en ce que** le premier dispositif de fixation (22) comporte plusieurs protubérances (26) qui s'étendent selon une direction (24) de la meuleuse d'angle électrique (2), de telle manière que plusieurs sections flexibles pliables de matériau plat (12) de différentes longueurs peuvent être fixées au premier dispositif de fixation (22).

10. Meuleuse d'angle électrique (2) selon l'une quelconque des revendications 8 à 9, **caractérisée en ce que** la première extrémité (18) de la section flexible pliable de matériau plat (12) est repliée ou coudée et est ainsi fixée de manière sécurisée au premier dispositif de fixation (22).

11. Meuleuse d'angle électrique (2) selon l'une quelconque des revendications 8 à 10, **caractérisée en ce que** le premier dispositif de fixation (22) solidaire du carter est formé par une pièce de construction, en partiarlier une pièce pliée emboutie (28), en particulier une pièce en tôle.

12. Meuleuse d'angle électrique (2) selon la revendication 11, **caractérisée en ce que** le premier dispositif de fixation solidaire du carter, formant une pièce de oonstruction (28) en particulier une pièce pliée emboutie (28), est fixée de manière sécurisée à un composant du carter (34.) de la meuleuse d'angle électrique (2).

13. Meuleuse d'angle électrique (2) selon l'une quelconque des revendications précédentes, **caractérisée par** une seconde extrémité (20) de la section flexible pliable de matériau plat (12) associée à un second dispositif de fixation (30) solidaire du carter.

14. Meuleuse d'angle électrique (2) selon la revendication 13, **caractérisée en ce que** le second dispositif de fixation (30) oomporte un élément ressort (32) qui précontraint la section flexibly pliable de matériau plat (12) dans la seconde position opérationnelle.

15. Meuleuse d'angle électrique (2) selon fune quelconque des revendications précédentes, **caractérisée en ce que** le bouton poussoir de commande (48) coopère avec le dispositif de freinage à bande (8) par l'intermédiaire d'un levier de libération (40), en particulier par l'intermédiaire d'une bascule (38), de sorte que levier de libération (40) agit par une de ses extrémités (42) sur la seconde extrémité (20) de la section flexible pliable de matériau plat (12).
